# EUROPÄISCHE PATENTSCHRIFT

(11) **EP 1 196 979 B1**
(45) Veröffentlichungstag und Bekanntmachung des Hinweises auf die Patenterteilung: **13.04.2005**
(21) Anmeldenummer: 00954512.0
(22) Anmeldetag: 15.07.2000
(51) Int. Cl.: H02K 5/173, H02K 7/08

(54) **ELEKTRISCHER KLEINMOTOR MIT AXIALLAGER**
SMALL ELECTRIC MOTOR WITH AXIAL BEARING
PETIT MOTEUR ELECTRIQUE A PALIER LISSE DE BUTEE

(30) Priorität: 17.07.1999 DE 29912530 U
(43) Veröffentlichungstag der Anmeldung: 17.04.2002
(73) Patentinhaber: ebm-papst St. Georgen GmbH & Co. KG, 78112 St. Georgen (DE)
(72) Erfinder: FEHRENBACHER, Wolfgang, D-78112 St. Georgen (DE)
(86) Internationale Anmeldenummer: PCT/EP2000/006763
(87) Internationale Veröffentlichungsnummer: WO 2001/006620

(56) Entgegenhaltungen:
- PATENT ABSTRACTS OF JAPAN vol. 1998, no. 10, 31. August 1998 (1998-08-31) & JP 10 136605 A (MATSUSHITA ELECTRIC IND CO LTD), 22. Mai 1998 (1998-05-22)
- PATENT ABSTRACTS OF JAPAN vol. 1999, no. 08, 30. Juni 1999 (1999-06-30) & JP 11 089164 A (SHINKO ELECTRIC CO LTD), 30. März 1999 (1999-03-30)
- PATENT ABSTRACTS OF JAPAN vol. 013, no. 289 (M-845), 5. Juli 1989 (1989-07-05) & JP 01 083885 A (MATSUSHITA SEIKO CO LTD), 29. März 1989 (1989-03-29)
- PATENT ABSTRACTS OF JAPAN vol. 009, no. 106 (E-313), 10. Mai 1985 (1985-05-10) & JP 59 230446 A (MATSUSHITA DENKI SANGYO KK), 25. Dezember 1984 (1984-12-25)

## Beschreibung

Die Erfindung betrifft einen elektrischen Kleinmotor.

Bekannte Kleinmotoren sind so aufgebaut, daß die Wellen der Rotoren aus Stahl bestehen, die am Wellenende eine im wesentlichen halbrunde Kuppe aufweisen, die gegen eine Anlagefläche anläuft. Nachteilig ist bei solchen Lagerungen, daß die Kuppe des Wellenendes wie ein magnetischer Pol wirkt und magnetische Partikel anzieht und so die Lagerstelle vorzeitig beschädigt und schließlich zerstört. Der magnetische Pol entsteht dadurch, daß die Welle aus ferromagnetischem Material besteht und der Rotor einen Permanentmagneten enthält, dessen Magnetfeld sich über der Welle schließt.

Solche beschädigten Lagerstellen verursachen starke Geräusche, die insbesondere bei kleinen Elektromotoren, die z. B. in Klimaanlagen von Kraftfahrzeugen laufen, nicht zulässig sind.

Ein Elektromotor (M) gemäß dem Oberbegriff des Anspruchs 1 ist aus dem Dokument PATENT ABSTRACTS OF JAPAN vol. 1999, no. 08, 30. Juni 1999 (1999-06-30) & JP 11 089164 A (SHINKO ELECTRIC CO LTD), 30. März 1999 (1999-03-30) bekannt. Um Reibungskräfte und damit verbundene Beschädigung der Anlagefläche zu vermindern wird die Lagerkugel aus einem harten Werkstoff hergestellt und die Anlagefläche als eine Hohlfläche mit einem definierten Krümmungsradius geformt.

Der Erfindung liegt die Aufgabe zugrunde, eine Lagerung bereitzustellen, die die vorgenannten Nachteile nicht aufweist.

Die Lösung der Aufgabe ist im Anspruch 1 angegeben.

Weitere Einzelheiten und vorteilhafte Weiterbildungen der Erfindung ergeben sich aus den im folgenden beschriebenen und in der Zeichnung dargestellten Ausführungsbeispielen sowie aus den Unteransprüchen.

Es zeigen:
- Fig. 1: einen Axialschnitt durch eine Ausführungsform einer erfindungsgemäßen Lagerung in einem Kleinlüfter,
- Fig. 2: eine Vergrößerung eines Ausschnittes II der Ausführungsform gemäß Fig. 1
und
- Fig. 3: eine weitere Ausführungsform einer erfindungsgemäßen Lagerung als vergrößerter Ausschnitt.

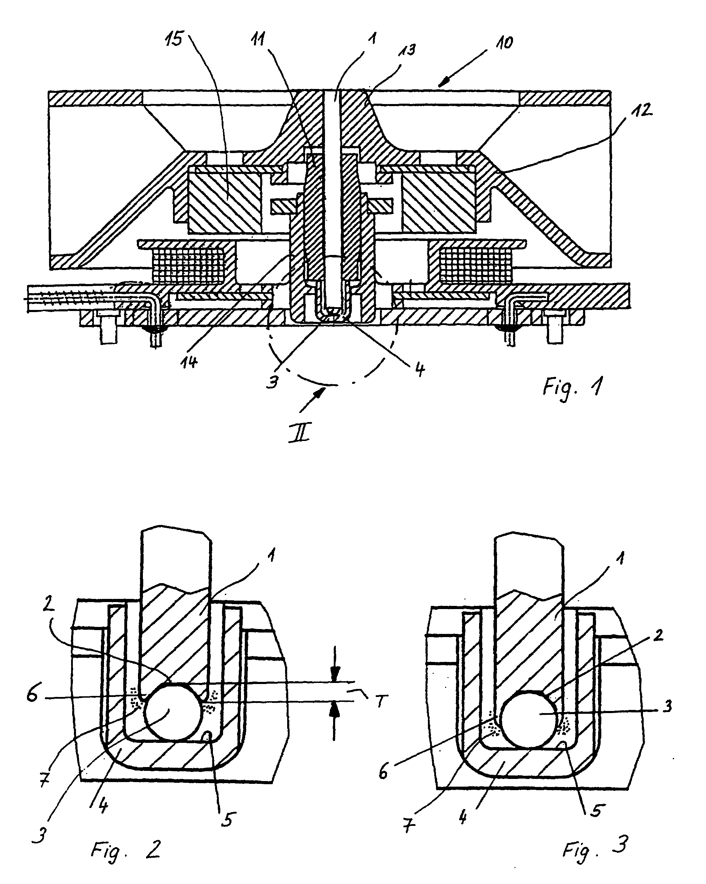

Als Anwendungsbeispiel ist in Fig. 1 ein von einem erfindungsgemäßen Kleinmotor angetriebener Kleinlüfter 10 dargestellt, wie er beispielsweise als Sensorlüfter in Klimaanlagen von Kraftfahrzeugen verwendet wird.

Dieser bekannte Lüfter 10 wird nur insoweit beschrieben, wie es für diese Erfindung erforderlich ist. Der Antriebsmotor des Lüfters 10, vorzugsweise ein elektrisch kommutierter Gleichstrommotor, weist einen Rotor mit einem Permanentmagneten 15 und mit einem am Rotor befestigten Lüfterrad 12 mit einer Nabe 13 auf, in deren Zentrum eine Welle 1 befestigt ist.

Die Welle 1 ist in einem Lager 11, das in einem Lagertragrohr 14 montiert ist, radial gelagert. An einem Ende der Welle 1 ist in einer Senkung 2 eine Kugel 3 eingelegt. Diese Kugel besteht aus nichtmagnetischem und verschleißarmem Material wie z. B. Stein, Keramik, Kunststoff oder Metall. Solche Kugeln mit hoher Oberflächengüte und sehr glatter Oberfläche sind sehr preiswert als Massenartikel, z.B. aus der Uhrenindustrie, zu beschaffen, d. h. solche Lagerung verursacht sehr geringe Mehrkosten und bewirkt bei solchen Kleinlüftem einen nicht mehr hörbaren Geräuschpegel bezüglich der Axiallagerung.

Fig. 2 zeigt in vergrößerter Darstellung die Welle 1 aus Stahl mit der Kugel 3, die in der Senkung 2 der Welle 1 eingelegt ist. Zur erleichterten Montage der Kugel 3 hat die Senkung 2 einen Winkel von etwa 90 ° und eine Tiefe T von etwa 0,3 des Kugeldurchmessers. Die Welle 1 des Rotors wird in bekannter Weise mittels definierter magnetischer Kraft in axialer Richtung beaufschlagt und drückt so die Kugel 3 gegen die Anlauffläche 5 einer Buchse 4 und stellt gleichzeitig eine axiale Sicherung des Rotors gegen Herausfallen, z. B. beim Transport, dar. Dabei wird an einem Rand 6 ein magnetischer Pol ausgebildet, der magnetische Partikel 7, die durch Montage oder Abrieb entstehen, anzieht und diese Partikel 7 damit von der axialen Lagerstelle zwischen der Kugel 3 und der Anlauffläche 5 fernhält. Diese Partikel 7 sind in der Regel hartmagnetische Teilchen ( beispielsweise vom Permanentmagneten des Rotors ) , die einen starken Antrieb bewirken und so zur schnellen Zerstörung von Lagerstellen führen.

Fig. 3 zeigt ein weiteres Ausführungsbeispiel einer erfindungsgemäßen Lagerung. Die Senkung 2 am Ende der Welle 1 ist hierbei so ausgeführt, daß die Kugel 3 etwa bis zur Hälfte in das Wellenende ragt. Der Rand 6 der Senkung 2 kann durch Verstemmung die Kugel 3 halten. Die Kugel 3 kann auch mittels eines Klebers mit dem Wellenende verbunden sein.

Die Erfindung ist nicht auf die dargestellten und beschriebenen Ausführungsbeispiele beschränkt.

## Patentansprüche

1. Elektrischer Kleinmotor ,
mit einem Rotor, der einen Permanentmagneten (15) enthält,
mit einer Welle (1) , der ein Radiallager (11) und ein Axiallager (3, 5) zugeordnet sind, wobei das als Gleitlager ausgebildete Axiallager eine Kugel (3) aufweist,
**dadurch gekennzeichnet, dass** die Kugel (3) eine nichtmagnetische Kugel ist,
die in einer an einem freien Ende der Welle (1) vorgesehenen Senkung (2) angeordnet ist und auf ihrer von der Welle (1) abgewandten Seite gegen die Anlauffläche (5) einer Buchse (4) anläuft,
dass die Welle (1) mittels einer magnetischen Kraft in Richtung zur Anlauffläche (5) beaufschlagt ist und dadurch die Kugel (3) gegen diese Anlauffläche (5) drückt ,
dass die Welle (1) aus einem ferromagnetischen Werkstoff ausgebildet ist und einen Teil des magnetischen Kreises des im Rotor vorgesehenen Permanentmagneten (15) bildet, wobei die nichtmagnetische Kugel (3) einen Luftspalt am freien Ende der Welle (1) bildet ,
und dass das diesem Luftspalt zugewandte Ende (6) der Welle (1) einen Magnetpol (6) bildet, der magnetische Partikel (7) im Bereich des Axiallagers (3, 5) anzieht, dadurch von der Anlauffläche fernhält, und einer Zerstörung der Anlauffläche (5) und der nichtmagnetischen Kugel (3) durch diese Partikel (7) entgegenwirkt.

2. Kleinmotor nach Anspruch 1 , **dadurch gekennzeichnet, dass** die Kugel (3) aus Steinmaterial besteht.

3. Kleinmotor nach Anspruch 1 , **dadurch gekennzeichnet , dass** die Kugel (3) aus Keramikmaterial besteht.

4. Kleinmotor nach Anspruch 1 , **dadurch gekennzeichnet , dass** die Kugel (3) aus Kunststoffmaterial besteht.

5. Kleinmotor nach einem der vorhergehenden Ansprüche, **dadurch gekennzeichnet, dass** die Kugel (3) eine glatte Oberfläche aufweist.

6. Verwendung eines Kleinmotors nach einem oder mehreren der vorhergehenden Ansprüche zum Antrieb eines Kleinlüfters (10).

## Claims

1. Small electric motor, with a rotor which comprises a permanent magnet (15), with a shaft (1) which has associated therewith a radial bearing (11) and an axial bearing (3, 5), wherein the axial bearing embodied as a friction bearing comprises a ball (3), **characterised in that** the ball (3) is a non-magnetic ball which is arranged in a recess (2) provided at one free end of the shaft (1) and on its side remote from the shaft (1) bears against the thrust face (5) of a bush (4), **in that** the shaft (1) is subjected to a magnetic force in the direction of the thrust face (5) and as a result presses the ball (3) against this thrust face (5), **in that** the shaft (1) is made of a ferromagnetic material and forms a part of the magnetic circuit of the permanent magnet (15) provided in the rotor, wherein the non-magnetic ball (3) forms an air gap at the free end of the shaft (1), and **in that** the end (6) of the shaft (1) facing this air gap forms a magnetic pole (6) which attracts magnetic particles (7) in the area of the axial bearing (3, 5) and as a result keeps them away from the thrust face, and counteracts destruction of the thrust face (5) and the non-magnetic ball (3) by these particles (7).

2. Small motor according to claim 1, **characterised in that** the ball (3) is made of stone material.

3. Small motor according to claim 1, **characterised in that** the ball (3) is made of ceramic material.

4. Small motor according to claim 1, **characterised in that** the ball (3) is made of plastic material.

5. Small motor according to one of the preceding claims, **characterised in that** the ball (3) has a smooth surface.

6. Use of a small motor according to one or more of the preceding claims for driving a small fan (10).

## Revendications

1. Petit moteur électrique,
avec un rotor qui contient un aimant permanent (15),
avec un arbre (1) auquel sont associés un palier radial (11) et un palier axial (3, 5), le palier axial réalisé sous la forme d'un palier lisse présentant une bille (3),
**caractérisé par le fait que** la bille (3) est une bille non magnétique qui est disposée dans un logement (2) prévu à une extrémité libre de l'arbre (1) et qui bute sur son côté opposé à l'arbre (1) contre la surface de butée (5) d'une douille (4),
que l'arbre (1) est contraint en direction de la surface de butée (5) au moyen d'une force magnétique et pousse par conséquent la bille (3) contre cette surface de butée (5),
que l'arbre (1) est réalisé dans un matériau ferromagnétique et forme une partie du circuit magnétique de l'aimant permanent (15) prévu dans le rotor, la bille non magnétique (3) formant un entrefer à l'extrémité libre de l'arbre (1),
et que l'extrémité (6) de l'arbre (1) tournée vers cet entrefer forme un pôle magnétique (6) qui attire les particules magnétiques (7) au niveau du palier axial (3, 5), les tenant ainsi à l'écart de la surface de butée et s'opposant à une destruction de la surface de butée (5) et de la bille non magnétique (3) par ces particules (7).

2. Petit moteur électrique selon la revendication 1, **caractérisé par le fait que** la bille (3) est réalisée en pierre.

3. Petit moteur électrique selon la revendication 1, **caractérisé par le fait que** la bille (3) est réalisée en céramique.

4. Petit moteur électrique selon la revendication 1, **caractérisé par le fait que** la bille (3) est réalisée en matière plastique.

5. Petit moteur électrique selon l'une des revendications précédentes, **caractérisé par le fait que** la bille (3) présente une surface lisse.

6. Utilisation d'un petit moteur selon l'une ou plusieurs des revendications précédentes pour entraîner un petit ventilateur (10).
